# EUROPEAN PATENT SPECIFICATION

(11) **EP 2 636 976 B1**
(45) Date of publication and mention of the grant of the patent: **11.09.2019**
(21) Application number: 12158920.4
(22) Date of filing: 09.03.2012
(51) Int. Cl.: F25D 29/00, F25D 17/06, F25B 49/02

(54) **Hybrid refrigerator and control method thereof**
Hybrider Kühlschrank und Steuerungsverfahren dafür
Réfrigérateur hybride et son procédé de commande

(43) Date of publication of application: 11.09.2013
(73) Proprietor: Whirlpool Corporation, Benton Harbor, MI 49022 (US)
(72) Inventor: Vanelli, Matteo Luciano, 21025 Comerio (IT); Olivani, Andrea, 21025 Comerio (IT); Paviglianiti, Gaetano, 21025 Comerio (IT); Paganini, Raffaele, 21025 Comerio (IT)
(74) Representative: Spina, Alessandro

(56) References cited:
- EP-A2- 0 859 206
- EP-A2- 1 426 711
- US-A- 4 257 238
- US-A- 5 257 508

## Description

The present invention relates to a refrigerator comprising a first compartment and a second compartment, a refrigeration system including a variable speed compressor, a condenser, a first evaporator for cooling the first compartment, a second evaporator for cooling the second compartment, an electrovalve for by-passing, in a predetermined configuration of the system, said first evaporator, and a fan associated to said second evaporator, at least a sensor for detecting an operating parameter of the refrigerator, and a control system for adjusting the operational speed of the compressor based on a signal received from said sensor.

The above kind of refrigerator, where the first compartment is usually a fresh food compartment and the second compartment is a freezer compartment, is also called "hybrid" refrigerator because it combines a static working condition in the fresh food compartment and a no-frost working condition for the freezer compartment only, with no exchange of air between the two compartments. These hybrid refrigerators have many advantages if compared to full no frost refrigerators in which a single evaporator is used for cooling both compartments, particularly because it allows avoiding one of the main drawbacks of full no frost refrigerators, i.e. drying of food items.

EP 1426711A2 discloses a refrigerator having two independently cooled cooling compartments. Each compartment has an evaporator and a fan.

US 4257238 A discloses a microcomputer control for an inverter-driven heat pump of a air conditioning system where the compressor speed is controlled as a varying function of the evaporator fan speed.

EP 0859206 A2 discloses a refrigeration system in which each compartment is provided with a variable speed fan.

US 5257508 A discloses an environmental control system for automobiles using a variable speed compressor.

With modern refrigerators, which use variable speed compressors (also known as variable capacity compressors) for reducing energy consumption by increasing efficiency, there is still the need, in certain working condition, to switch off and on the compressor. This leads to an increase in energy consumption at start-up of a variable capacity compressor in a no frost refrigerator-freezer appliance and in a hybrid refrigerator when in some operating conditions duty cycle of the compressor is represented by an almost entirely ON phase, with some incidental OFF phases.

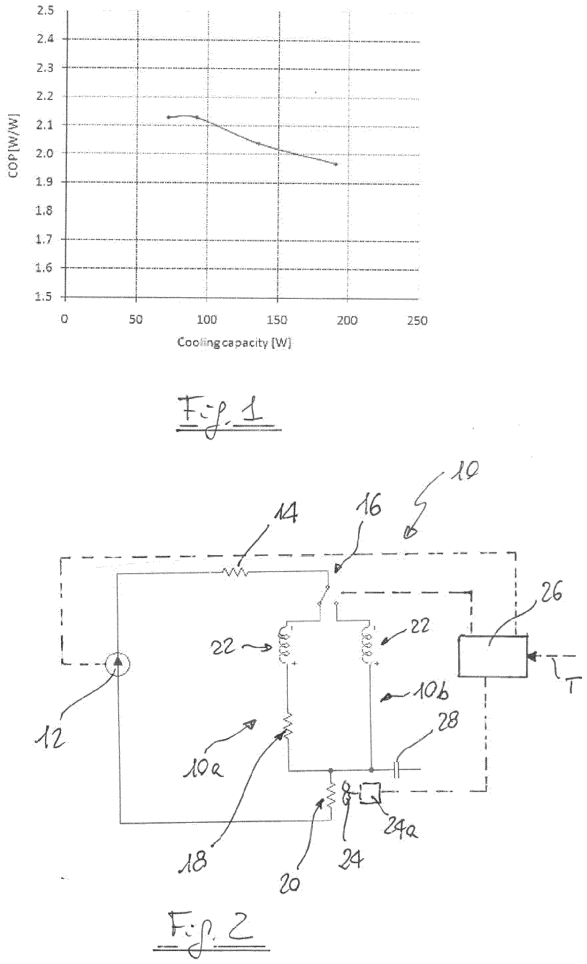

When refrigerator appliances are equipped with a single speed compressor, usually it is designed to provide a level of cooling capacity, when ON, higher than what required just to balance heat gain in standard conditions (default temperature set-point, +25°C ambient temperature), driving a duty cycle of ON and OFF phases. A variable capacity compressor (hereinafter referred to as VCC) is usually designed to have a maximum cooling capacity sufficient just to balance heat load in worst operating conditions (e.g.: coldest set-point in tropical ambient temperature) and a minimum cooling capacity depending on mechanical limitations (typically lubrication issues occur below a certain rotational speed). Since, in European countries, normative energy test is performed at an intermediate set point (+5°C refrigerator, -18°C freezer) at +25°C ambient temperature, VCC usually tends to run at minimum velocity, turning ON and OFF depending on minimum cooling capacity deliverable (typically higher than what instantly required). If only some short OFF periods are present, the peak in power absorption at compressor start-up deals with a loss in overall energy consumption (with respect to compressor continuously ON, which conversely would lead to a too cold appliance). An evidence of the convenience to run the VCC at minimum speed is shown in figure 1 which relates to a coefficient of performance of a compressor Embraco VEMY7C in a refrigeration circuit where the evaporation temperature is -25°C and the condensation temperature is 35°C. An object of the present invention is to provide a hybrid refrigerator which does not present the above drawbacks and which has very high energy efficiency.

According to the invention, such object is reached thanks to the features listed in the appended claims.

The present invention is mainly focused on those No Frost hybrid refrigerator-freezer appliances which are provided with a direct control of VCC speed, depending on request coming from control board. Since, according to experiments carried out by the applicant, it appears convenient to run compressor continuously at minimum cooling capacity with respect to let it cycle, with a power absorption peak at start-up and a possible negative impact on freezer temperature, according to the invention a control algorithm is proposed. According to such algorithm, in a preferred embodiment thereof, the freezer evaporator fan is not turned on contemporaneously with compressor, but a variable duty cycle is provided. The minimum ON period of the duty cycle fan is fixed in the design phase, depending on the inertia of air circulation system: the entire freezer compartment must be reached by the cold airflow during each ON cycle. Moreover, the ON period is adjusted (remaining always higher
than its minimum value) according to an adaptive procedure, depending on temperature set-point selected by user and on speed set-point decided by control board for VCC. The higher the temperature set-point (average of refrigerator and freezer set-point), the shorter the ON time of the fan duty cycle. As an alternative solution, also the freezer fan can be provided with a variable speed motor and in this case the speed of the fan is adjusted on the basis of a similar algorithm. In both solutions a reduction in cooling capacity provided by the system (freezer evaporator is still cooled down, but cold air is not blown within freezer cavity or blown at a very low speed), allowing the compressor to remain turned on at its minimum speed, avoiding short OFF phases. With the coldest temperature set-point, the fan may even not cycle at all, remaining always ON when compressor is ON, to deliver the maximum cooling capacity available. The higher the speed set-point of the compressor (decided by the control board algorithm and provided to the compressor through a control signal), the longer the ON time of the fan or the higher the speed thereof. Speed-set point takes into account events occurred (such as door openings, increase in ambient temperature, warm load inside appliance, etc.): increasing the ON time of fan (or increasing its speed) with the control signal to the compressor allows the system to best react to sudden events or changes in ambient conditions, providing more cooling capacity to freezer cavity when required. A trade-off between the signal coming from temperature set-point and the signal coming from speed set-point is required and managed by the control board, providing to the fan a final duty cycle or final speed which takes into account both the inputs.

Further advantages and features of a refrigerator and a method for the control thereof will become clear from the following detailed description, with reference to the attached drawings, in which:
- Figure 1 is a diagram showing the coefficient of performance of a variable speed compressor vs. cooling capacity;
- Figure 2 is a schematic view of a refrigeration system of a hybrid refrigerator according to the invention;
- Figure 3 is a diagram showing some parameters vs. time of a hybrid refrigerator of figure 2, with set points of +8°C and -17°C for fresh food compartment and for freezer compartment respectively, and 25°C as ambient temperature; and
- Figure 4 is a diagram similar to figure 3, with set points of +7°C and -18°C for fresh food compartment and for freezer compartment respectively, and 25°C as ambient temperature.

With reference to figure 2, an hybrid refrigerator according to the invention comprises a refrigeration circuit 10 including a variable speed compressor 12, a condenser 14, an electrovalve 16 for feeding a refrigerant fluid alternatively in a first portion 10a of the circuit including a first evaporator 18 for the fresh food compartment and a second evaporator 20 for the freezer compartment, in series to the first evaporator, or in a second portion 10b of the circuit for by-passing the first evaporator 18. Both circuit portions 10a and 10b comprise an expansion capillary tube 22 or an expansion valve. The second evaporator 20 is provided with a fan 24 driven by an electric motor 24a. Such motor 24a, together with the variable speed compressor 12 and the electrovalve 16 is connected to a control unit 26 associated to a user interface where the user can input a set value of temperature (shown in figure 2 with reference T). A refrigerant accumulator 28 can be also used in the circuit 10.

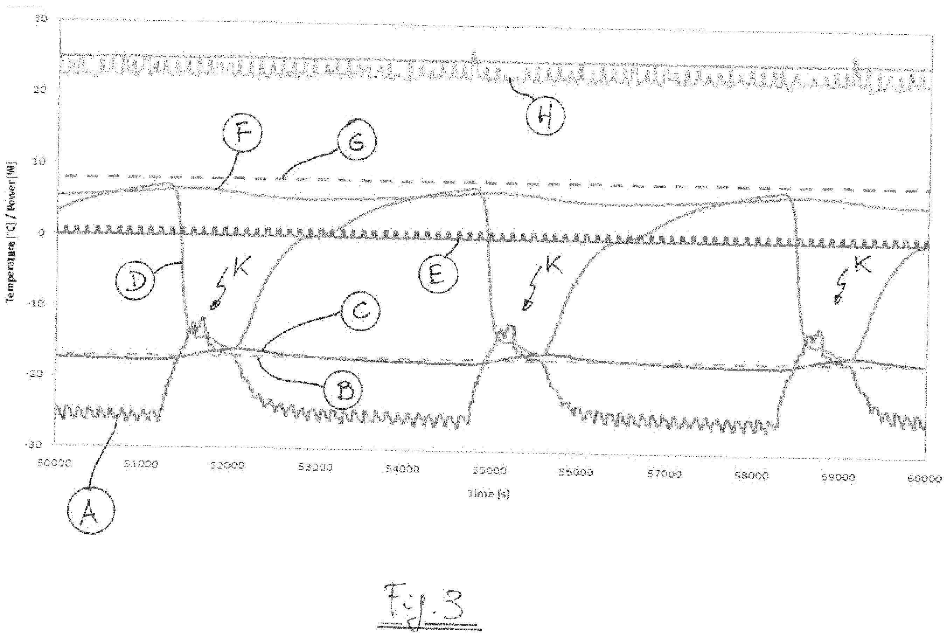

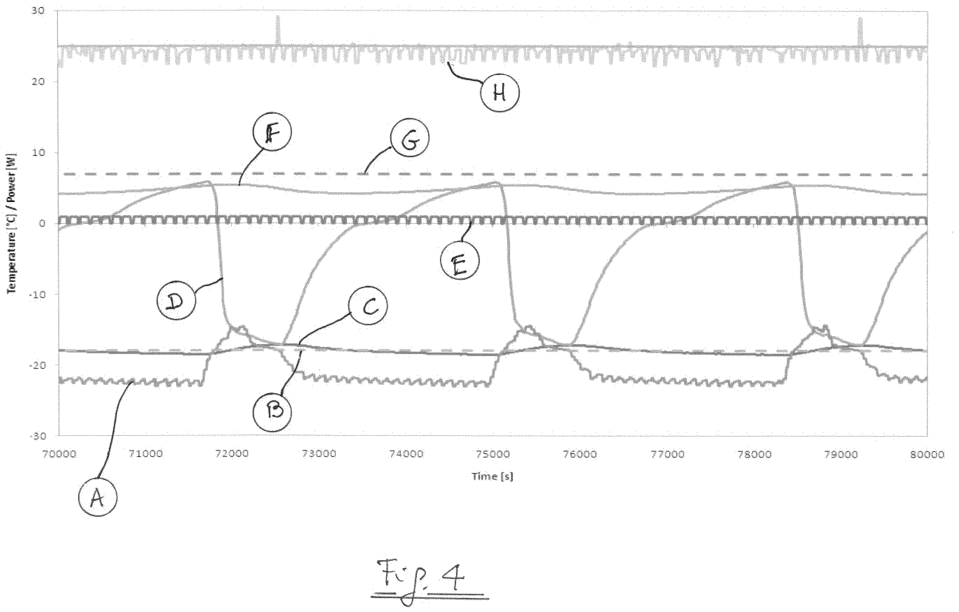

The function of the refrigeration circuit of figure 2 is shown in the diagrams of figure 3 and 4, where the only differences are related to different set-points of temperatures for the fresh food compartment and for the freezer compartment.

In the diagrams the values vs. time of the following parameters are reported:
A temperature of the second evaporator 20 (freezer compartment)
B set-point temperature of the freezer compartment
C actual temperature in the freezer compartment
D temperature of the first evaporator 18 (fresh food compartment)
E on/off duty cycle of the fan 24
F actual temperature in the fresh food compartment
G set-point temperature of the fresh food compartment
H electrical power

The cyclic behavior of both evaporators 18 and 20 is due to the cyclic working of the electrovalve 16, typical of hybrid no-frost refrigerators. When the electrovalve is in the configuration shown in figure 2 (no by-pass of first evaporator), the temperature of first evaporator 18 (line D) goes down while the temperature of the second evaporator 20 (line A) increases since it is fed by the same refrigeration fluid, so that in a certain working condition (shown in figure 3 with reference K) both evaporators have approximately the same temperature (they behave as a single evaporator).

When the electrovalve is in the other configuration (not shown in the drawing), the first evaporator 18 is by-passed so that the temperature thereof increases while the temperature of the second evaporator 20 (line A) decreases. When the temperature of the second evaporator 20 is close to the value which corresponds to the set value for the freezer compartment (line B), then the oscillation of the evaporator around such value is obtained mainly by a corresponding on/off cycle of the fan 24, shown by line E.

By changing the set value T on the control circuit 26 (figure 4), it is clear how the on phase of the duty cycle of the fan 24 increases.

It is important to point out that in all working conditions (including those of figure 3 and 4) the fan 24 is maintained at the lowest duration of the on-cycle (or at the lowest speed, in case the motor 24a of the fan 24 is a variable speed motor), and this duration or speed is increased on the basis of the decreased set temperature chosen by the user (open loop control) and from the feedback of the compressor speed (closed loop control).

It is also possible to increase the precision of the control, without departing from the general inventive concept of the present invention, by using temperature sensors on the second evaporator 20 and/or in the freezer compartment, and/or on the first evaporator 18 and/or on the fresh food compartment.

The applicant has carried out experimental tests which have shown a decrease of energy consumption of the order of 4÷6% if compared to hybrid no-frost refrigerators in which the fan 24 is cycled on and off with the compressor.

## Claims

1. Refrigerator comprising a first compartment and a second compartment, wherein said first compartment and said second compartment do not exchange air between them, a refrigeration system (10) including a compressor (12), a condenser (14), a first evaporator (18) for the first compartment, a second evaporator (20) for the second compartment in series to the first evaporator (18), an electrovalve (16) for by-passing, in a predetermined configuration of the system, said first evaporator (18), and a fan (24, 24a) associated to said second evaporator (20), **characterized in that** said compressor (12) is a variable speed compressor and **in that** the refrigerator comprises at least a sensor for detecting the speed of the variable speed compressor (12), and a control system (26) for adjusting said operational speed of the compressor (12) based on a signal received from said sensor and a temperature set-point chosen by a user, wherein said control system (26) is adapted to adjust the working condition of the fan (24, 24a) so that cold air is not blown or blown at a very low speed in the second compartment when the compressor (12) remains turned on at its minimum speed in order to avoid the switch off of the variable speed compressor (12).

2. Refrigerator according to claim 1, wherein the first compartment is a fresh food compartment and the second compartment is a freezer compartment.

3. Refrigerator according to claim 2, wherein the altered working condition of the fan (24, 24a) is a change of the duty cycle thereof.

4. Refrigerator according to claim 2, wherein the altered working condition of the fan (24, 24a) is a change of speed thereof.

5. Refrigerator according to claim 3 and 4, wherein the altered working condition of the fan (24, 24a) is a combination of changes of duty cycle and speed.

6. Refrigerator according to any of claims 1-5, wherein it comprises a temperature sensor in the freezer compartment.

7. Refrigerator according to claim 6, wherein it comprises a temperature sensor on the second evaporator (20).

8. Method for controlling a refrigerator comprising a first compartment and a second compartment, wherein said first compartment and said second compartment do not exchange air between them, a refrigeration system (10) including a compressor (12), a condenser (14), a first evaporator (18) for the first compartment, a second evaporator (20) for the second compartment in series to the first evaporator (18), an electrovalve (16) for by-passing, in a predetermined configuration of the system, said first evaporator (18), and a fan (24, 24a) associated to said second evaporator (20), **characterized in that** the compressor (12) is a variable speed compressor and **in that** the refrigeration system (10) comprises at least a sensor detecting the speed of the variable speed compressor (12), and a control system (26) adjusting the operational speed of the compressor (12) based on a signal received from said sensor and a temperature set-point chosen by a user, and adjusting the working condition of the fan (24, 24a) so that cold air is not blown or blown at a very low speed in the second compartment when the compressor (12) remains turned on at its minimum speed in order to avoid the switch off of the variable speed compressor (12).

9. Method according to claim 8, wherein the first compartment is a fresh food compartment and the second compartment is a freezer compartment.

10. Method according to claim 9, wherein the duty cycle of fan (24, 24a) is adjusted.

11. Method according to claim 9, wherein the speed of the fan (24, 24a) is adjusted.

12. Method according to claim 11 and 12, wherein the duty cycle and the speed of the fan (24, 24a) are adjusted.

13. Method according to any of claims 8-12, wherein a further operating parameter of the refrigerator is the temperature in the freezer compartment.

## Patentansprüche

1. Kühlschrank, umfassend ein erstes Fach und ein zweites Fach, wobei das erste Fach und das zweite Fach keine Luft zwischen ihnen austauschen, ein Kühlsystem (10), enthaltend einen Verdichter (12), einen Kondensator (14), einen ersten Verdampfer (18) für das erste Fach, einen zweiten Verdampfer (20) für das zweite Fach in Reihe zum ersten Verdampfer (18), ein Elektroventil (16) zum Umgehen, in einer vorbestimmten Konfiguration des Systems, des ersten Verdampfers (18), und einen Ventilator (24, 24a) der dem zweiten Verdampfer (20) zugeordnet ist,
**dadurch gekennzeichnet, dass** der Verdichter (12) ein Verdichter mit variabler Geschwindigkeit ist, und dass der Kühlschrank mindestens einen Sensor zum Erfassen der Geschwindigkeit des Verdichters (12) mit variabler Geschwindigkeit, und ein Steuersystem (26) zum Einstellen der Betriebsgeschwindigkeit des Verdichters (12) basierend auf einem von jenem Sensor empfangenen Signal und einem von einem Benutzer gewählten Temperatursollwert umfasst,
wobei das Steuersystem (26) angepasst ist, um den Betriebszustand des Ventilators (24, 24a) so einzustellen, dass kalte Luft nicht geblasen oder mit einer sehr niedrigen Geschwindigkeit in das zweite Fach geblasen wird, wenn der Verdichter (12) mit seiner minimalen Geschwindigkeit eingeschaltet bleibt, um das Abschalten des Verdichters (12) mit variabler Geschwindigkeit zu vermeiden.

2. Kühlschrank nach Anspruch 1, wobei das erste Fach ein Frischnahrungsmittelfach und das zweite Fach ein Gefrierfach ist.

3. Kühlschrank nach Anspruch 2, wobei der geänderte Betriebszustand des Ventilators (24, 24a) eine Änderung des Arbeitszyklus desselben ist.

4. Kühlschrank nach Anspruch 2, wobei der geänderte Betriebszustand des Ventilators (24, 24a) eine Änderung der Geschwindigkeit desselben ist.

5. Kühlschrank nach Anspruch 3 und 4, wobei der geänderte Betriebszustand des Ventilators (24, 24a) eine Kombination von Änderungen des Arbeitszyklus und der Geschwindigkeit ist.

6. Kühlschrank nach einem der Ansprüche 1 bis 5, wobei er einen Temperatursensor im Gefrierfach umfasst.

7. Kühlschrank nach Anspruch 6, wobei er einen Temperatursensor am zweiten Verdampfer (20) umfasst.

8. Verfahren zum Steuern eines Kühlschranks, umfassend ein erstes Fach und ein zweites Fach, wobei das erste Fach und das zweite Fach keine Luft zwischen ihnen austauschen,
ein Kühlsystem (10), enthaltend einen Verdichter (12), einen Kondensator (14), einen ersten Verdampfer (18) für das erste Fach, einen zweiten Verdampfer (20) für das zweite Fach in Reihe zum ersten Verdampfer (18), ein Elektroventil (16) zum Umgehen, in einer vorbestimmten Konfiguration des Systems, des ersten Verdampfers (18), und einen Ventilator (24, 24a), der dem zweiten Verdampfer (20) zugeordnet ist,
**dadurch gekennzeichnet, dass** der Verdichter (12) ein Verdichter mit variabler Geschwindigkeit ist und dass das Kühlsystem (10) mindestens einen Sensor umfasst, der die Geschwindigkeit des Verdichters mit variabler Geschwindigkeit (12) erfasst, und ein Steuersystem (26), das die Betriebsgeschwindigkeit des Verdichters (12) basierend auf einem vom Sensor empfangenen Signal und einem von einem Benutzer gewählten Temperatursollwert anpasst,
und Einstellen des Betriebszustands des Ventilators (24, 24a), so dass kalte Luft nicht geblasen oder mit einer sehr niedrigen Geschwindigkeit in das zweite Fach geblasen wird, wenn der Verdichter (12) mit seiner minimalen Geschwindigkeit eingeschaltet bleibt, um das Abschalten des Verdichters (12) mit variabler Geschwindigkeit zu vermeiden.

9. Verfahren nach Anspruch 8, wobei das erste Fach ein Frischnahrungsmittelfach und das zweite Fach ein Gefrierfach ist.

10. Verfahren nach Anspruch 9, wobei der Arbeitszyklus des Ventilators (24, 24a) eingestellt wird.

11. Verfahren nach Anspruch 9, wobei die Geschwindigkeit des Ventilators (24, 24a) eingestellt wird.

12. Verfahren nach Anspruch 11 und 12, wobei der Arbeitszyklus und die Geschwindigkeit des Ventilators (24, 24a) eingestellt werden.

13. Verfahren nach einem der Ansprüche 8 bis 12, wobei ein weiterer Betriebsparameter des Kühlschranks die Temperatur im Gefrierfach ist.

## Revendications

1. Réfrigérateur comprenant un premier compartiment et un second compartiment, dans lequel ledit premier compartiment et ledit second compartiment n'échangent pas d'air entre eux, un système de réfrigération (10) incluant un compresseur (12), un condenseur (14), un premier évaporateur (18) pour le premier compartiment, un second évaporateur (20) pour le second compartiment en série avec le premier évaporateur (18), une électrovanne (16) pour contourner, dans une configuration prédéterminée du système, ledit premier évaporateur (18), et un ventilateur (24, 24a) associé audit second évaporateur (20), **caractérisé en ce que** ledit compresseur (12) est un compresseur à vitesse variable et **en ce que** le réfrigérateur comprend au moins un capteur pour détecter la vitesse du compresseur à vitesse variable (12), et un système de commande (26) pour ajuster ladite vitesse opérationnelle du compresseur (12) sur la base d'un signal reçu en provenance dudit capteur et d'un point de consigne de température choisi par un utilisateur, dans lequel ledit système de commande (26) est conçu pour ajuster la condition de travail du ventilateur (24, 24a) de sorte que de l'air froid n'est pas soufflé ou est soufflé à une vitesse très basse dans le second compartiment lorsque le compresseur (12) reste en fonction à sa vitesse minimale afin d'éviter la coupure du compresseur à vitesse variable (12).

2. Réfrigérateur selon la revendication 1, dans lequel le premier compartiment est un compartiment pour aliments frais et le second compartiment est un compartiment congélateur.

3. Réfrigérateur selon la revendication 2, dans lequel la condition de travail modifiée du ventilateur (24, 24a) est un changement du rapport cyclique de ce dernier.

4. Réfrigérateur selon la revendication 2, dans lequel la condition de travail modifiée du ventilateur (24, 24a) est un changement de vitesse de ce dernier.

5. Réfrigérateur selon les revendications 3 et 4, dans lequel la condition de travail modifiée du ventilateur (24, 24a) est une combinaison des changements de rapport cyclique et de vitesse.

6. Réfrigérateur selon l'une quelconque des revendications 1 à 5, dans lequel il comprend un capteur de température dans le compartiment congélateur.

7. Réfrigérateur selon la revendication 6, dans lequel il comprend un capteur de température sur le second évaporateur (20).

8. Procédé pour commander un réfrigérateur comprenant un premier compartiment et un second compartiment, dans lequel ledit premier compartiment et ledit second compartiment n'échangent pas d'air entre eux, un système de réfrigération (10) incluant un compresseur (12), un condenseur (14), un premier évaporateur (18) pour le premier compartiment, un second évaporateur (20) pour le second compartiment en série avec le premier évaporateur (18), une électrovanne (16) pour contourner, dans une configuration prédéterminée du système, ledit premier évaporateur (18), et un ventilateur (24, 24a) associé audit second évaporateur (20), **caractérisé en ce que** le compresseur (12) est un compresseur à vitesse variable et **en ce que** le système de réfrigération (10) comprend au moins un capteur détectant la vitesse du compresseur à vitesse variable (12), et un système de commande (26) ajustant la vitesse opérationnelle du compresseur (12) sur la base d'un signal reçu en provenance dudit capteur et d'un point de consigne de température choisi par un utilisateur, et ajustant la condition de travail du ventilateur (24, 24a) de sorte que de l'air froid n'est pas soufflé ou est soufflé à une vitesse très basse dans le second compartiment lorsque le compresseur (12) reste en fonction à sa vitesse minimale afin d'éviter la coupure du compresseur à vitesse variable (12).

9. Procédé selon la revendication 8, dans lequel le premier compartiment est un compartiment pour aliments frais et le second compartiment est un compartiment congélateur.

10. Procédé selon la revendication 9, dans lequel le rapport cyclique du ventilateur (24, 24a) est ajusté.

11. Procédé selon la revendication 9, dans lequel la vitesse du ventilateur (24, 24a) est ajustée.

12. Procédé selon les revendications 11 et 12, dans lequel le rapport cyclique et la vitesse du ventilateur (24, 24a) sont ajustés.

13. Procédé selon l'une quelconque des revendications 8 à 12, dans lequel un paramètre de fonctionnement supplémentaire du réfrigérateur est la température dans le compartiment congélateur.
